# FASCICULE DE BREVET EUROPEEN

(11) **EP 3 139 296 B1**
(45) Date de publication et mention de la délivrance du brevet: **14.03.2018**
(21) Numéro de dépôt: 16186496.2
(22) Date de dépôt: 31.08.2016
(51) Int. Cl.: G06F 21/55

(54) **SYSTEME INFORMATIQUE DE GESTION SECURISEE D'INFORMATIONS NUMERIQUES**
INFORMATIONSSYSTEM ZUR GESICHERTEN VERWALTUNG VON DIGITALEN INFORMATIONEN
COMPUTER SYSTEM OF SECURE DIGITAL INFORMATION MANAGING

(30) Priorité: 07.09.2015 FR 1558289
(43) Date de publication de la demande: 08.03.2017
(73) Titulaire: Docapost DPS, 94220 Charenton le Pont (FR)
(72) Inventeur: LAURENT, Antoine, 44300 Nantes (FR)
(74) Mandataire: Lavoix

(56) Documents cités:
- EP-A1- 2 120 177
- EP-A1- 2 908 495
- EP-A2- 2 071 504
- US-A1- 2012 137 367

## Description

La présente invention concerne un système informatique de gestion sécurisée d'informations numériques utilisable dans le domaine de l'archivage numérique.

En particulier, l'invention se rapporte à un tel système informatique de gestion sécurisée d'informations numériques mettant en oeuvre la traçabilité à valeur probante de ces informations numériques.

Un tel système comprend :
- des moyens de production d'informations numériques ;
- des moyens de conservation d'informations numériques ;
- des moyens de diffusion et de consommation d'informations numériques ;
- des moyens de traçabilité d'informations numériques comportant un journal d'événements relatifs à des informations numériques et des moyens de détection aptes à détecter chaque évènement relatif à chaque information numérique conservée dans les moyens de conservation, pour enregistrer cet évènement dans le journal d'événements.

Il est connu dans l'état de la technique, l'utilisation des systèmes informatiques de gestion sécurisée d'informations numériques permettant de mettre en oeuvre la traçabilité à valeur probante de ces informations numériques.

En particulier, ces systèmes assurent la gestion sécurisée d'informations numériques durant différentes phases de vie de ces informations comprenant notamment une phase de production, une phase de conservation et une phase de consommation.

L'ensemble de ces phases forme alors un cycle de vie de l'information numérique correspondante.

Les systèmes de gestion permettent en outre de conserver de manière sécurisée les informations numériques et de tracer tout évènement relatif aux informations numériques conservées.

Chaque information numérique se présente par exemple sous la forme d'un document électronique ou de tout autre fichier informatique dont la conservation à long terme est nécessaire.

On conçoit alors que les systèmes informatiques de gestion trouvent notamment leur application dans le domaine de l'archivage numérique des documents électroniques.

Ainsi, chaque évènement relatif à un document électronique comprend par exemple l'ouverture, la modification, la duplication ou la suppression de ce document électronique.

La traçabilité des informations numériques assurée par ces systèmes doit répondre à un ou plusieurs textes normatifs, parmi lesquels on peut notamment citer AFNOR Z42013, AFNOR Z42019, MOREQ 1, 2 et 2010, OAIS, ISO 30300, ISO 30301 et ISO 27001.

En particulier, le texte normatif AFNOR Z42013 est applicable en matière de conservation d'informations numériques à valeur probante.

Ce texte stipule que tout évènement relatif à une information numérique, pour être opposable, doit être inscrit dans un journal d'événements prévu à cet effet et stocké sous une forme sécurisée.

Ce journal d'événements est associé à des moyens de traçabilité qui permettent de capter automatiquement chaque évènement relatif à chaque information numérique stockée dans des moyens de conservation et de décrire cet évènement dans le journal d'événements.

La description d'un évènement comprend toute sorte d'information complémentaire de cet évènement comme par exemple des informations sur l'auteur de l'événement, sur sa date, sa manière d'exécuter, ses raisons, le nombre de répétition, etc.

On connait également un système de gestion d'informations numériques décrit dans US 2012/137367 A1.

Toutefois, les systèmes informatiques de gestion sécurisée existants ne sont pas complètement satisfaisants.

Plus particulièrement, ces systèmes ne permettent pas de tracer les évènements relatifs aux informations numériques durant tout le cycle de vie de ces informations.

En effet, certains de ces systèmes permettent uniquement de tracer les évènements relatifs aux informations numériques durant la phase de conservation de ces informations numériques.

D'autres systèmes informatiques de gestion sécurisée assurent en outre la traçabilité des informations numériques durant par exemple la phase de production de ces informations, mais ne permettent pas d'avoir une vue complète sur l'ensemble d'événements survenus pendant le cycle de vie complet de ces informations.

La présente invention a pour but de proposer un système informatique de gestion sécurisée d'informations numériques remédiant aux inconvénients précités.

À cet effet, l'invention a pour objet un système informatique conforme à la revendication 1.

Suivant d'autres aspects avantageux de l'invention, le système informatique de gestion sécurisée comprend une ou plusieurs des caractéristiques des revendications 1 à 7.

Ces caractéristiques et avantages de l'invention apparaitront à la lecture de la description qui va suivre, donnée uniquement à titre d'exemple non limitatif, et faite en référence aux dessins annexés, sur lesquels :
- la figure 1 est une vue schématique d'un système informatique de gestion sécurisée d'informations numériques selon l'invention, le système comportant notamment un journal d'évènements ; et
- la figure 2 est vue schématique du journal d'événements de la figure 1.

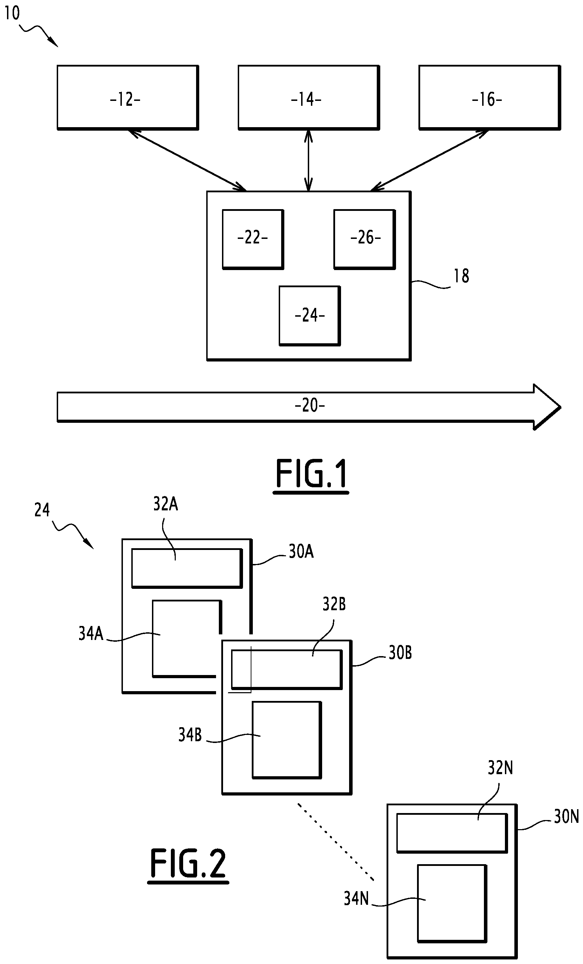

On a en effet représenté sur la figure 1, un système informatique de gestion sécurisée d'informations numériques selon l'invention.

Ce système est désigné par la référence générale 10 sur la figure 1.

Le système 10 est notamment utilisable dans le domaine de l'archivage numérique de documents électroniques.

Ainsi, selon cet exemple d'application, chaque information numérique comprend un document électronique.

Le système 10 comprend des moyens de production d'informations numériques, des moyens de conservation d'informations numériques, des moyens de diffusion et de consommation d'informations numériques et des moyens de traçabilité d'informations numériques.

Ces différents moyens sont désignés respectivement par les références générales 12, 14, 16 et 18 sur la figure 1.

Les moyens de production 12 permettent de générer des informations numériques de manière connue en soi dans l'état de la technique.

Dans le domaine de l'archivage numérique, ces moyens de production 12 comprennent par exemple un calculateur apte à recevoir des données numériques à archiver et à former à partir de ces données, une archive à stocker.

Les moyens de conservation 14 comprennent par exemple un ou plusieurs serveurs connectés et aptes à stocker des informations numériques de manière sécurisée.

Ces informations sont par exemple stockées de manière redondante avec un accès limité et contrôlé par des moyens de sécurisation prévus à cet effet.

Les moyens de diffusion et de consommation 16 permettent d'extraire des informations numériques conservées dans les moyens de conservation 14, pour transmettre ces informations à un utilisateur ou pour les utiliser à d'autres fins prédéterminées.

Ainsi, par exemple, dans le domaine de l'archivage numérique, ces moyens 16 forment une interface de communication avec l'utilisateur permettant notamment de consulter les archives conservées.

On conçoit alors que les moyens de production 12, les moyens de conservation 14 et les moyens de diffusion et de consommation 16 assurent la gestion des informations numériques durant le cycle de vie complet de ces informations.

Le cycle de vie de chaque information numérique est illustré schématiquement par une flèche 20 sur la figure 1, et comprend notamment une phase de production assurée par les moyens de production 12, une phase de conservation assurée par les moyens de conservation 14 et une phase de consommation assurée par les moyens de diffusion et de consommation 16.

En outre, les moyens de production 12, les moyens de conservation 14 et les moyens de diffusion et de consommation 16 sont par exemple des moyens hétérogènes, situés dans des endroits géographiques distincts et implémentés selon des technologies différentes.

Les moyens de traçabilité 18 comportent des moyens de détection d'événements relatifs à chaque information numérique, un journal de ces évènements et un module de sécurisation du journal.

Ces différents composants des moyens de traçabilité 18 sont respectivement désignés par les références générales 22, 24 et 26 sur la figure 1.

On comprend ainsi par « évènement », toute action exercée par un utilisateur ou par un système informatique sur une information numérique.

Ainsi, par exemple, chaque évènement est choisi dans le groupe comportant au moins :
- création d'une information numérique ;
- modification d'une information numérique ;
- suppression d'une information numérique ;
- duplication d'une information numérique ;
- diffusion d'une information numérique ; et
- consultation d'une information numérique.

Dans l'exemple de la figure 1, les moyens de détection 22 se présentent sous la forme d'un module de détection 22 indépendant des moyens de production 12, des moyens de conservation 14 et des moyens de diffusion et de consommation 16.

En variante, les moyens de détection 22 se présentent sous la forme de trois modules de détection indépendants intégrés dans les moyens de production 12, les moyens de conservation 14 et les moyens de diffusion et de consommation 16. Chacun de ces modules de détection est analogue au module de détection 22 de la figure 1.

Le module de détection 22 est apte à détecter chaque évènement relatif à chaque information numérique lors de chacune des phases du cycle de vie de cette information numérique.

En particulier, le module de détection 22 est apte à détecter chaque évènement relatif à cette information numérique lors de la production de celle-ci par les moyens de production 12, lors de la conservation de celle-ci par les moyens de conservation 14 et lors de la diffusion ou de la consommation de celle-ci par les moyens de diffusion et de consommation 16.

Le module de détection 22 est par exemple réalisé sous la forme d'un logiciel mis en oeuvre indépendamment des moyens de production 12, des moyens de conservation 14 et des moyens de diffusion et de consommation 16 d'informations numériques.

Le module de détection 22 est apte en outre à enregistrer chaque évènement détecté dans le journal d'événements 24 selon un format d'enregistrement commun pour l'ensemble des événements.

En complément, le module de détection 22 est apte à enregistrer dans le journal 24 des métadonnées accompagnant chaque événement.

Ces métadonnées comprennent par exemple la date de l'événement, l'identificateur de l'auteur de l'événement, le nombre de répétitions, etc.

Ainsi, le journal d'événements 24 est partagé entre les moyens 12, 14 et 16 et permet d'enregistrer l'ensemble d'événements survenus dans ces moyens selon un format d'enregistrement commun.

Le module de sécurisation 26 permet de sécuriser le journal d'événements 24 selon une technologie de sécurisation conforme par exemple à un texte normatif tel que AFNOR Z42013.

Le journal d'événements 24 sous une forme sécurisée mise en oeuvre par le module de sécurisation 26, est schématiquement illustré sur la figure 2.

Ainsi, en référence à cette figure, le journal d'événements 24 est présenté sous la forme d'une séquence de fichiers informatiques désignés par les références générales 30A à 30N.

Chaque fichier informatique 30A à 30N comprend un entête 32A à 34N et un corps 34A à 34N.

L'entête 32A à 32N de chaque fichier informatique 30A à 30N suivant comporte une empreinte du fichier informatique 30A à 30N précédent dans la séquence.

Chaque empreinte est par exemple réalisée selon une technique d'encodage connue en soi.

Le corps 34A à 34N de chaque fichier informatique 30A à 30N comporte des enregistrements correspondant à au moins certains évènements détectés par le module de détection 22, par exemple selon un ordre chronologique de ces événements.

Ainsi, dans l'exemple de la figure 2, l'entête 32B du fichier informatique 30B comporte une empreinte du fichier informatique 30A.

Les fichiers 30A à 30N forment ainsi un ensemble continu ce qui permet d'éviter toute modification illégitime du journal d'événements 24, comme par exemple une suppression ou un ajout d'un enregistrement non-autorisé.

Le fonctionnement du système 10 va désormais être expliqué.

Ainsi, lors de chacune des phases de vie d'une information numérique, le module de détection 24 détecte chaque évènement relatif à cette information numérique.

Puis, le module de détection 22 enregistre chaque évènement détecté dans le journal 26 sous la forme sécurisée.

Pour ce faire, le module de détection 22 transmet l'enregistrement correspondant éventuellement avec des métadonnées associées, au module de sécurisation 26 qui ajoute un nouvel enregistrement dans le dernier fichier de la séquence des fichiers 30A à 30N existants ou crée un nouveau fichier dans cette séquence pour cet enregistrement.

Bien entendu, d'autres exemples de réalisation de l'invention sont également possibles.

On conçoit alors que la présente invention comporte un certain nombre d'avantages.

En particulier, le système selon l'invention permet de tracer chaque évènement relatif à chaque information numérique durant chacune des phases de vie de cette information.

La détection et l'enregistrement de ces évènements s'effectuent de manière centralisée par des moyens de détection indépendants.

Ceci permet alors d'obtenir une vue complète sur l'ensemble des évènements relatifs à une information numérique donnée.

De plus, chaque évènement est enregistré en utilisant un format unique ce qui évite la nécessité d'avoir un traitement spécifique pour chacune des phases de vie de l'information numérique correspondante.

Finalement, le journal d'événements est stocké de manière centralisée et sécurisée ce qui permet de satisfaire aux exigences de différents textes normatifs pour assurer notamment la valeur probante de chaque information numérique.

## Revendications

1. Système informatique (10) de gestion sécurisée d'informations numériques mettant en oeuvre la traçabilité à valeur probante de ces informations numériques, le système étant notamment utilisable dans le domaine de l'archivage numérique, et comprenant :
- des moyens de production (12) d'informations numériques ;
- des moyens de conservation (14) d'informations numériques ;
- des moyens de diffusion et de consommation (16) d'informations numériques ;
- des moyens de traçabilité (18) d'informations numériques comportant un journal d'événements (24) relatifs à des informations numériques et des moyens de détection (22) aptes à détecter chaque évènement relatif à chaque information numérique conservée dans les moyens de conservation (14), pour enregistrer cet évènement dans le journal d'événements (24) ;
et dans lequel
l es moyens de détection (22) sont aptes à détecter en outre chaque évènement relatif à chaque information numérique lors de la production de celle-ci par les moyens de production (12) et lors de la diffusion ou de la consommation de celle-ci par les moyens de diffusion et de consommation (16), pour enregistrer cet évènement dans le journal d'événements (24) qui est partagé entre les moyens de production (12), les moyens de conservation (14) et les moyens de diffusion et de consommation (16) ; le système (10) étant **caractérisé en ce que**
l es moyens de traçabilité (18) comportent en outre un module de sécurisation (26) permettant de sécuriser le journal d'évènements, le module de sécurisation (26) étant apte à présenter le journal d'événements (24) sous la forme d'une séquence de fichiers informatiques (30A,...,30N), chaque fichier informatique (30A,...,30N) suivant comprenant un entête (32A,...,32N) comportant une empreinte d'un fichier informatique précédent et un corps (34A,...,34N) comportant des enregistrements correspondant à au moins certains évènements détectés par les moyens de détection (22).

2. Système (10) selon la revendication 1, **caractérisé en ce que** les moyens de détection (22) sont aptes à enregistrer chaque évènement dans le journal d'événements (24) selon un format d'enregistrement commun pour l'ensemble des événements.

3. Système (10) selon l'une quelconque des revendications précédentes, **caractérisé en ce que** chaque évènement est choisi dans le groupe comportant au moins :
- création d'une information numérique ;
- modification d'une information numérique ;
- suppression d'une information numérique ;
- duplication d'une information numérique ;
- diffusion d'une information numérique ; et
- consultation d'une information numérique.

4. Système (10) selon l'une quelconque des revendications précédentes, **caractérisé en ce que** les moyens de détection se présentent sous la forme de trois modules de détection (22) indépendants intégrés dans les moyens de production (12), les moyens de conservation (14) et les moyens de diffusion et de consommation (16).

5. Système (10) selon l'une quelconque des revendications 1 à 3, **caractérisé en ce que** les moyens de détection se présentent sous la forme d'un module de détection (22) indépendant des moyens de production (12), des moyens de conservation (14) et des moyens de diffusion et de consommation (16).

6. Système (10) selon la revendication 4 ou 5, **caractérisé en ce que** le ou chaque module de détection (22) est réalisé sous la forme d'un logiciel.

7. Système (10) selon l'une quelconque des revendications précédentes, **caractérisé en ce que** chaque information numérique comprend un document électronique.

## Patentansprüche

1. Computersystem (10) zum gesicherten Verwalten von digitalen Informationen, welches die beweiskräftige Nachverfolgbarkeit dieser digitalen Informationen umsetzt, wobei das System insbesondere im Bereich der digitalen Archivierung verwendbar ist und aufweist:
- Mittel zum Erzeugen (12) von digitalen Informationen,
- Mittel zum Speichern (14) von digitalen Informationen,
- Mittel zum Übertragen und Verbrauchen (16) von digitalen Informationen,
- Mittel zur Nachverfolgbarkeit (18) von digitalen Informationen, aufweisend ein Protokoll von Ereignissen (24), die digitale Informationen betreffen, und Mittel zum Detektieren (22), die in der Lage sind, jedes Ereignis bezüglich jeder digitalen Information zu detektieren, die in den Mitteln zum Speichern (14) gespeichert ist, um dieses Ereignis im Ereignisprotokoll (24) zu speichern,
und wobei
die Mittel zum Detektieren (22) in der Lage sind, ferner jedes Ereignis in Bezug auf jede digitale Information beim Erzeugen derselben mittels der Mittel zum Erzeugen (12) und beim Übertragen oder beim Verbrauchen derselben durch die Mittel zum Übertragen und zum Verbrauchen (16) zu detektieren, um dieses Ereignis im Ereignisprotokoll (24) zu speichern, welches von den Mitteln zum Erzeugen (12), den Mitteln zum Speichern (14) und den Mitteln zum Übertragen und zum Verbrauchen (16) untereinander geteilt ist, wobei das System (10) **dadurch gekennzeichnet ist, dass**
die Mittel zur Nachverfolgbarkeit (18) ferner ein Sicherungsmodul (26) aufweisen, welches das Sichern des Ereignisprotokolls ermöglicht, wobei das Sicherungsmodul (26) in der Lage ist, das Ereignisprotokoll (24) in Form einer Sequenz von Computerdateien (30A, ..., 30N) darzustellen, wobei jede nachfolgende Computerdatei (30A, ..., 30N) aufweist: einen Kopf (32A, ..., 32N), der einen Abdruck einer vorhergehenden Computerdatei aufweist, und einen Körper (34A, ..., 34N), der Datensätze aufweist, die zumindest bestimmten Ereignissen entsprechen, die durch die Mittel zum Detektieren (22) detektiert werden.

2. System (10) gemäß Anspruch 1, **dadurch gekennzeichnet, dass** die Mittel zum Detektieren (22) in der Lage sind, jedes Ereignis im Ereignisprotokoll (24) gemäß einem für die Gesamtheit der Ereignisse gemeinsamen Speicherformat zu speichern.

3. System (10) gemäß irgendeinem der vorhergehenden Ansprüche, **dadurch gekennzeichnet, dass** jedes Ereignis aus der Gruppe ausgewählt ist, die mindestens aufweist:
- Erzeugen einer digitalen Information,
- Modifizieren einer digitalen Information,
- Löschen einer digitalen Information,
- Duplizieren einer digitalen Information,
- Übertragen einer digitalen Information und
- Nachschlagen einer digitalen Information.

4. System (10) gemäß irgendeinem der vorhergehenden Ansprüche, **dadurch gekennzeichnet, dass** die Mittel zum Detektieren in Form von drei unabhängigen Detektionsmodulen (22) vorliegen, die in die Mittel zum Erzeugen (12), die Mittel zum Speichern (14) und die Mittel zum Übertragen und Verbrauchen (16) integriert sind.

5. System (10) gemäß irgendeinem der Ansprüche 1 bis 3, **dadurch gekennzeichnet, dass** die Mittel zum Detektieren in Form eines Detektionsmoduls (22) vorliegen, das von den Mitteln zum Erzeugen (12), den Mitteln zum Speichern (14) und den Mitteln zum Übertragen und zum Verbrauchen (16) unabhängig ist.

6. System (10) gemäß Anspruch 4 oder 5, **dadurch gekennzeichnet, dass** das oder jedes Detektionsmodul (22) in Form einer Software realisiert ist.

7. System (10) gemäß irgendeinem der vorhergehenden Ansprüche, **dadurch gekennzeichnet, dass** jede digitale Information ein elektronisches Dokument aufweist.

## Claims

1. A computer system (10) for the secure management of digital information implementing probative value traceability of that digital information, the system in particular being usable in the field of digital archiving, and comprising:
- means (12) for producing digital information;
- means (14) for preserving digital information;
- means (16) for distributing and consuming digital information;
- means (18) for the traceability of digital information including an event log (24) of events relative to digital information and detection means (22) able to detect each event relative to each item of digital information preserved in the preservation means (14), to record that event in the event log (24);
wherein the detection means (22) are further able to detect each event relative to each item of digital information during the production thereof by the production means (12) and during the distribution or consumption thereof by the distribution and consumption means (16), to record that event in the event log (24) that is shared between the production means (12), the preservation means (14) and the distribution and consumption means (16);
the system (10) being **characterized in that** the traceability means (18) further include a securing module (26) making it possible to secure the event log, the securing module (26) being able to present the event log (24) in the form of a sequence of computer files (30A,...,30N), each following computer file (30A,...,30N) comprising a header (32A,...,32N) including an imprint of a preceding computer file and a body (34A,...,34N) including records corresponding to at least certain events detected by the detection means (22).

2. The system (10) according to claim 1, **characterized in that** the detection means (22) are able to record each event in the event log (24) in a record format shared by all of the events.

3. The system (10) according to any one of the preceding claims, **characterized in that** each event is chosen from the group including at least:
- creation of an item of digital information;
- modification of an item of digital information;
- deletion of an item of digital information;
- duplication of an item of digital information;
- distribution of an item of digital information; and
- consultation of an item of digital information.

4. The system (10) according to any one of the preceding claims, **characterized in that** the detection means assume the form of three independent detection modules (22) integrated into the production means (12), the preservation means (14) and the distribution and consumption means (16).

5. The system (10) according to any one of claims 1 to 3, **characterized in that** the detection means assume the form of a detection module (22) independent of the production means (12), the preservation means (14) and the distribution and consumption means (16).

6. The system (10) according to claim 4 or 5, **characterized in that** the or each detection module (22) is made in the form of a software program.

7. The system (10) according to any one of the preceding claims, **characterized in that** each item of digital information comprises an electronic document.
